# FASCICULE DE BREVET EUROPEEN

(11) **EP 0 700 142 B1**
(45) Date de publication et mention de la délivrance du brevet: **23.04.2003**
(21) Numéro de dépôt: 95402000.4
(22) Date de dépôt: 04.09.1995
(51) Int. Cl.: H02J 7/14

(54) **Circuit de détection de la fermeture d'une clé de contact pour la commande d'un régulateur de la charge d'une batterie par un alternateur, équipé de moyens de dérivation des courants de fuite parasites**
Schaltung für die Ermittlung des Schliessens eines Zündschlüssels für die Steuerung eines Ladereglers zur Ladung einer Batterie mittels eines Wechselstromgenerators, wobei die Schaltung eines Fehlerstromshuntanordnung aufweist
Circuit for detecting the closing of an ignition key for the control of a charge regulator for the charging of a battery by means of an alternator, with means for shunting parasitic leakage currents

(30) Priorité: 05.09.1994 FR 9410608
(43) Date de publication de la demande: 06.03.1996
(73) Titulaire: VALEO EQUIPEMENTS ELECTRIQUES MOTEUR, 94000 Créteil (FR)
(72) Inventeur: Pierret, Jean-Marie, F-75012 Paris (FR)
(74) Mandataire: Le Forestier, Eric

(56) Documents cités:
- DE-A- 2 354 796
- FR-A- 2 674 063

## Description

La présente invention a trait d'une façon générale aux circuits de commande de la régulation des alternateurs de véhicules automobiles.

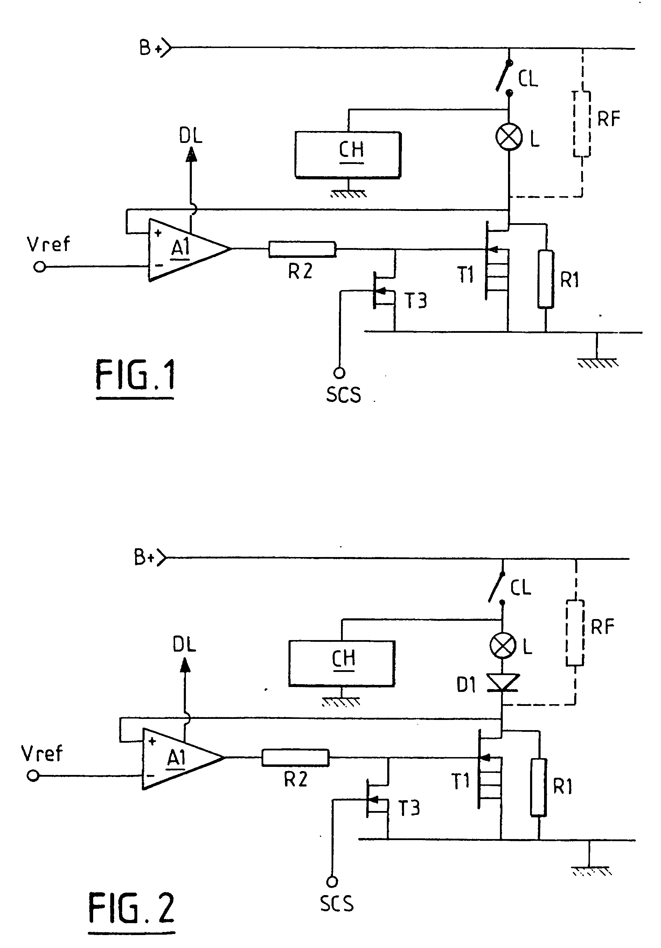

On a représenté sur la figure 1 des dessins un circuit de détection de la fermeture d'une clé de contact d'un véhicule automobile, destiné à sélectivement activer/désactiver le circuit de régulation associé à l'alternateur pour charger la batterie du véhicule.

La tension, notée B+, de la batterie du véhicule, est reliée à une borne de l'interrupteur CL constitué par la clé de contact du véhicule. L'autre borne de l'interrupteur CL est reliée à une borne d'une lampe témoin L, ainsi qu'à divers circuits CH du véhicule destinés à être alimentés lors de la fermeture de la clé de contact, ces circuits étant dénommés charges sous clé. L'autre borne de la lampe est reliée à l'entrée positive d'un comparateur A1, ainsi qu'au drain d'un transistor MOS de puissance T1, dont la source est à la masse.

L'entrée négative du comparateur A1 est reliée à une tension de référence Vref, par exemple égale à 1 volt.

La sortie du comparateur A1 est reliée à la grille de T1 via une résistance R2.

Une autre sortie DL du comparateur est destinée à être reliée au circuit régulateur (non représenté), pour sélectivement activer/désactiver celui-ci.

La grille de T1 est également reliée au drain d'un autre transistor MOS T3, dont la source est à la masse et dont la grille reçoit un signal de commande de signalisation SCS. Enfin une résistance R1 est branchée entre la masse et le drain de T1.

On a désigné par la référence RF une résistance de fuite entre la tension B+ et la borne de la lampe L opposée à la clé CL, une telle résistance étant susceptible d'apparaître notamment sous l'effet de dépôts conducteurs tels que des ponts salins créés lorsque le véhicule est exposé à des brouillards salins.

Lorsque la clé de contact CL est ouverte, la résistance R1 amène le drain de T1 à la masse. Cette mise à la masse du drain de T1 est renforcée par la lampe L en série avec les circuits CH également à la masse. En conséquence le courant susceptible de circuler dans la résistance de fuite RF est dérivé vers la masse via R1, ainsi que via L et les circuits CH. L'effet de RF, qui est censée amener le drain de T1 à un potentiel positif, est neutralisé car RF se trouve en parallèle avec la très faible impédance constituée par la lampe L en série avec les circuits CH.

Dans ces conditions, et si le moteur du véhicule n'est pas en rotation, le régulateur reste au repos; son enroulement d'excitation n'est traversé par aucun courant, et un courant de repos minimal, de l'ordre de 1 mA, est mis en jeu.

Lorsque la clé CL est fermée, la tension source-drain de T1 augmente pour se trouver supérieure à la tension Vref, qui comme on l'a indiqué est de l'ordre de 1 volt.

Dans le cas d'un régulateur de type mono-multifonction, le franchissement par la tension source-drain de cette valeur de 1 volt est utilisé comme détection de la fermeture de la clé, de façon classique en soi, via la lampe témoin L, et ceci même lorsque ladite lampe L est allumée. Pour plus de détails quant à cette détection de fermeture de clé dans ce type d'alternateur, on se référera au document FR-A-2 674 063 au nom de la Demanderesse.

Lorsque, la clé étant fermée, le moteur est en rotation et la régulation de l'alternateur s'effectue normalement, le signal de commande SCS appliqué à la grille de T3 permet de bloquer T1. La détection de la fermeture de la clé est alors confirmée, dans la mesure où la tension source-drain de T1 devient alors bien supérieure à la tension Vref.

Dans tous les cas, une tension source-drain sur T1 égale ou supérieure à la tension Vref induit cependant une consommation de courant par le régulateur; plus particulièrement :
- si le moteur est à l'arrêt, le régulateur est en pré-excitation et il est consommé un courant généralement de l'ordre de 100 mA, qui finit par vider la batterie du véhicule;
- si le moteur est en rotation, le régulateur de l'alternateur remplit son rôle normal de régulation de la charge de la batterie, et adapte le courant d'excitation en conséquence.

Cependant, et maintenant en référence à la figure 2 des dessins, il existe une variante du circuit de détection de fermeture de clé de la figure 1 dans laquelle une diode D1 ou encore une diode électroluminescente) est interposée entre la lampe L et le drain de T1, dans le sens conducteur. Dans ce cas, les charges sous clé CH sont incapables de ramener à la masse le potentiel de drain de T1 lorsque la clé CL est ouverte. Dans ce cas, seule la résistance R1 est à même de ramener ce potentiel de drain à zéro.

Deux hypothèses peuvent alors être envisagées :
- si la valeur de la résistance R1 est élevée (par exemple de l'ordre de 10 kΩ), alors le circuit est susceptible de signaler une fermeture de clé même si celle-ci est ouverte. En effet le potentiel de drain de T1 est à un niveau intermédiaire entre B+ et la masse, du fait du pont diviseur formé par R1 et la résistance parasite RF. Pratiquement, ceci risque de se produire si la valeur de RF est inférieure à 100 à 200 kΩ. Dans ce cas, le circuit de régulation de l'alternateur quitte l'état de repos pour passer à l'état de pré-excitation, et la consommation passe d'environ 1 mA à environ 100 mA, pour risquer là encore de vider la batterie;
- si en revanche la valeur de R1 est faible (par exemple de l'ordre de 200Ω), alors le potentiel de drain de T1 est maintenu à une valeur faible, inférieure à Vref, et les dépôts conducteurs à l'origine de la résistance RF n'ont pas d'incidence : le régulateur reste au repos et la consommation est négligeable.

Mais une telle résistance R1 de faible valeur a l'inconvénient de dissiper une puissance d'environ 1 watt lorsque le régulateur est en action (clé fermée, moteur tournant, lampe L éteinte). Cette valeur est importante comparativement à la puissance dissipée normalement par un régulateur, qui est de l'ordre de 3 watts. De plus, une telle résistance a pour inconvénient d'occuper une surface importante de silicium dans le cas où elle est implantée dans un circuit monolithique.

La présente invention vise à pallier ces inconvénients.

Ainsi la présente invention propose un circuit de détection de la fermeture d'une clé de contact, destiné à la mise en service d'un circuit régulateur de la charge d'une batterie par un alternateur, ce circuit comprenant en série entre la tension de batterie et la masse un interrupteur de clé de contact, une lampe témoin, une diode, et un interrupteur commandé à semi-conducteur, ainsi qu'un moyen pour comparer la tension au point commun entre la diode et l'interrupteur à semi-conducteur avec une faible valeur prédéterminée, dont une sortie commande le circuit régulateur, et un moyen pour commander l'ouverture dudit interrupteur une fois que la régulation s'effectue normalement, caractérisé en ce qu'il comprend en outre un circuit de dérivation des courants susceptibles de circuler dans une résistance parasite reliant la tension de batterie à la borne haute de l'interrupteur commmandé, branché entre ladite borne haute et la masse et comprenant un moyen à semi-conducteur.

Certains aspects préférés, mais non limitatifs, du dispositif selon l'invention sont les suivants :
- dans un premier mode de réalisation, ledit moyen à semi-conducteur comprend un premier transistor, il est prévu un second transistor de même type que le premier transistor, les deux transistors étant branchés en miroirs de courant, et il est prévu en outre une source de courant constant entre la tension de batterie et le second transistor, le moyen à semi-conducteur du circuit de dérivation étant constitué par le premier transistor.
- le second transistor présente une surface de jonction égale à une fraction de celle du premier transistor, de telle sorte que le courant maximal susceptible d'être dérivé est égal à un multiple du courant produit par la source de courant constant.
- il est prévu au niveau de la sortie du moyen comparateur une diode destinée à empêcher toute circulation de courant en provenance de la source de courant constant en direction dudit moyen comparateur.
- dans un second mode de réalisation, le circuit de dérivation comprend soit un montage série d'un transistor et d'une résistance, ce montage étant branché en parallèle avec l'interrupteur à semi-conducteur, soit un transistor branché en parallèle avec l'interrupteur à semi-conducteur, ledit transistor présentant une résistance substantielle en conduction.
- une borne de commande du transistor du circuit de dérivation reçoit une tension constante.
- le circuit comprend un autre transistor branché entre ladite borne de commande et la masse et dont une borne de commande reçoit une tension qui est fonction de la tension aux bornes dudit interrupteur à semi-conducteur. Les transistors sont des transistors de type MOS.

D'autres aspects, buts et avantages de la présente invention apparaîtront mieux à la lecture de la description détaillée suivante de formes de réalisation préférées de celle-ci, donnée à titre d'exemple et faite en référence au dessin annexé, sur lequel :
la figure 1 illustre un premier circuit de détection de fermeture de clé de la technique antérieure,
la figure 2 illustre un second circuit de détection de fermeture de clé de la technique antérieure,
la figure 3 illustre un circuit de détection de fermeture de clé selon une première forme de réalisation de la présente invention,
la figure 4 illustre un circuit de détection de fermeture de clé selon une seconde forme de réalisation de la présente invention, et
la figure 5 illustre un circuit de détection de fermeture de clé selon une troisième forme de réalisation de la présente invention.

On notera préliminairement que, d'une figure à l'autre, des éléments ou parties identiques ou similaires sont désignés dans la mesure du possible par les mêmes signes de référence.

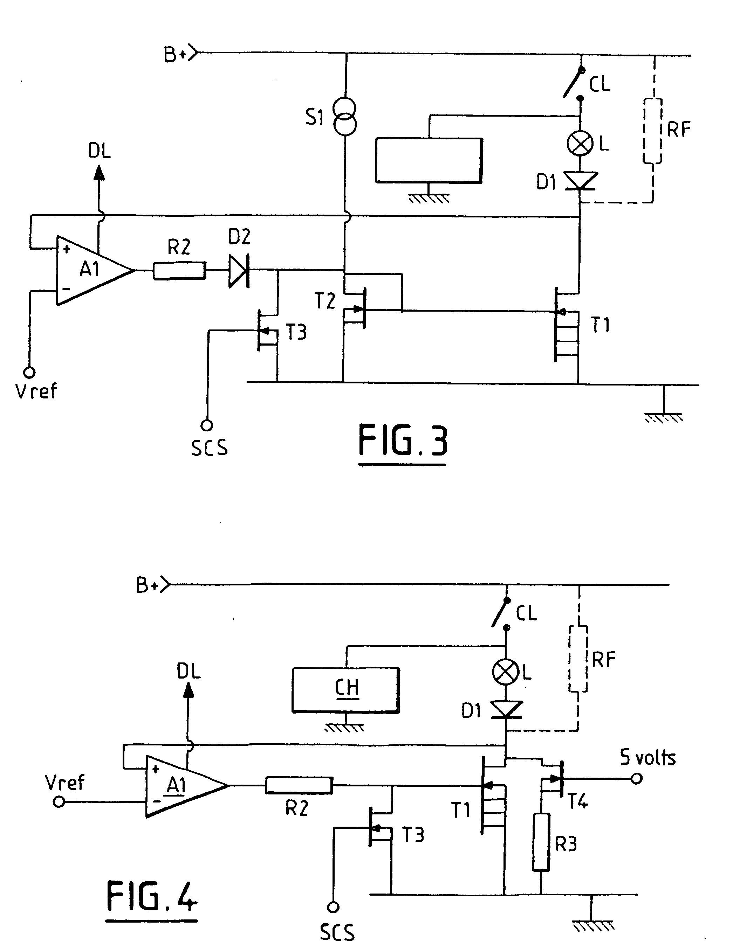

En référence maintenant à la figure 3, on a représenté un circuit qui partage avec le circuit de la figure 2 de la technique antérieure les éléments suivants : clé de contact CL, lampe témoin L, diode D1, transistor MOS de puissance T1, circuit comparateur A1, R2, et transistor MOS de commande T3.

Le circuit de la figure 3 se distingue de celui de la figure 2 principalement par le fait que la résistance R1 est omise, et remplacée par un miroir de courant comprenant une source de courant constant S1, fixant par exemple une valeur faible de l'ordre de 50 µA, le transistor T1 et un transistor MOS T2. La source de courant Si est branchée entre la tension B+ de la batterie et le drain de T2. La source de T2 est à la masse, tandis que sa grille est reliée d'une part à son drain, et d'autre part à la grille de T1.

On observera également que la sortie de A1 est reliée à la grille de T1 via la résistance R2 en série avec une autre diode D2, branchée dans le sens conducteur de R2 vers T1.

On observera ici que la surface importante de T1 par rapport à T2 permet de couper des courants de fuite importants au niveau de T1, par exemple de l'ordre de 5 à 10 mA, à partir d'une consommation permanente, fixée par S1, qui est extrêmement faible (en l'espèce 50 µA).

Ainsi tous les courants de fuite raisonnables susceptibles de circuler dans la résistance parasite RF issue par exemple d'un pont salin sont dérivés vers la masse par T1, qui présente une résistance drain-source faible, de telle sorte que le drain de T1 reste à un potentiel inférieur à la tension Vref.

Par exemple, on choisit pour T2 un transistor ayant une surface 200 fois plus faible que celle de T1, ce qui ne pose concrètement aucun problème dans le cas d'un circuit semi-conducteur monolithique car le surcroît de surface utilisée est extrêmement faible. Le courant maximal délivré par T1 est donc de 200 fois le courant engendré par S1, soit 10 mA. Pratiquement, une telle valeur permet de dériver les courants de fuite provoqués par tous dépôts conducteurs ayant une résistance supérieure ou égale à environ 2000 Ω.

Lorsque le moteur est en rotation, la clé CL étant fermée et aucun défaut n'étant détecté, alors T1 est bloqué via T3, qui reçoit le signal de commande de signalisation SCS. Dans cette situation, le miroir de courant constitué par T1 et T2 ne consomme aucun courant, ce qui résoud l'un des problèmes de l'art antérieur.

La diode D2 prévue entre R2 et les grilles de T1 et T2 permet d'éviter que le courant engendré par le générateur S1 ne soit dérivé vers A1 via la résistance R2.

Ainsi on réalise un circuit qui permet d'éviter les effets perturbateurs des résistances parasites RF occasionnées par exemple par les ponts salins d'une manière extrêmement simple et économique, sans accroître son encombrement et sans occasionner de dissipation de puissance indésirable.

En référence maintenant à la figure 4, on a représenté un circuit selon une deuxième forme de réalisation de l'invention. Ce circuit se distingue de l'état de la technique tel que défini sur la figure 2 par le fait que la résistance R1 est remplacée par un transistor MOS T4 et par une résistance R3. Plus précisément, le drain de T4 est relié au drain de T1, tandis que R3 est branchée entre la source de T4 et la masse. La grille de T4 reçoit une tension par exemple de +5 volts, pour être rendu passant. Ainsi tout courant de fuite susceptible de naître à cause d'une résistance de fuite RF est dérivé vers la masse via le circuit T4, R3. Une telle solution est avantageuse en ce qu'elle occasionne une consommation de courant et une dissipation de puissance bien inférieures à celles de la résistance R1 de la figure 2. En effet, on a vu qu'une résistance R1 de 200 Ω pouvait dissiper 1 W (clé fermée, moteur tournant, lampe L éteinte). Dans les mêmes conditions, un ensemble R3, T4 consommant 10 mA, ne dissipe que 140 mW.

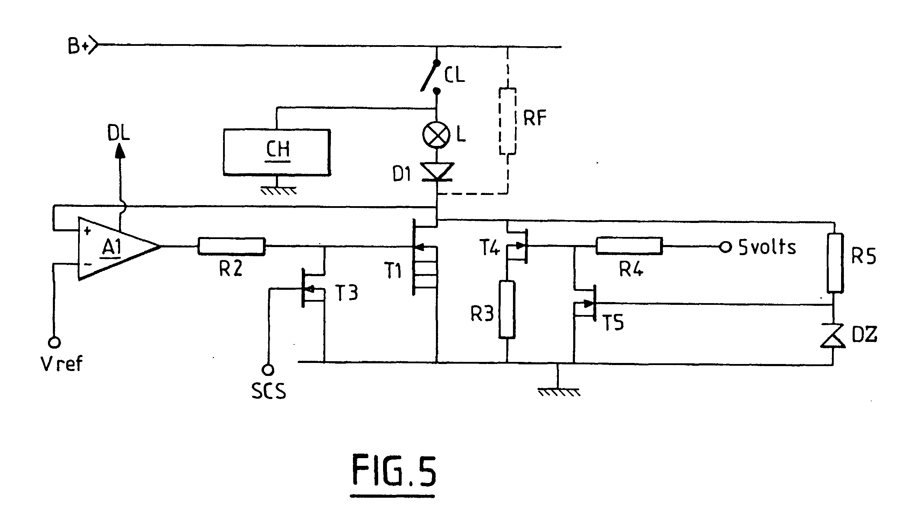

La figure 5 représente une variante de réalisation de la figure 4, destinée à éviter toute consommation de courant au niveau de T4, R3, indésirable, lorsque la clé est fermée et la lampe L est éteinte, le moteur étant en rotation. En effet, dans la réalisation de la figure 4, ce circuit T4, R3 consomme aussi longtemps que T1 est bloqué.

Le circuit de la figure 5 se distingue de celui de la figure 4 en ce que la tension de 5 volts est appliquée à la grille de T4 via une résistance R4. La grille de T4 est en outre reliée au drain d'un autre transistor MOS T5, dont la source est à la masse et dont la grille est reliée au point commun entre une diode zéner DZ et une autre résistance R5. L'autre borne de la diode DZ est reliée à la masse, tandis que l'autre borne de R5 est reliée aux drains de T1 et T4.

Le fonctionnement du circuit de la figure 5 est le suivant :
- tout d'abord, lorsque le moteur est à l'arrêt, le comparateur A1 maintient la tension de drain de T1 à une valeur inférieure à la tension Vref d'environ 1 volt. Cette valeur de 1 volt, appliquée à la grille de T5, n'est pas suffisante pour rendre celui-ci passant et T5 est donc bloqué. Dans ce cas, T4 et R3 peuvent dériver les courants de fuite dès que la clé de contact est ouverte, comme dans le cas de la figure 4.
- lorsque le moteur est en rotation, la clé CL étant fermée, la lampe L est éteinte et le drain de T1 est au potentiel B+. Dans ce cas, T5 devient passant, ce qui amène le potentiel de grille de T4 à une valeur suffisamment faible pour bloquer ce dernier. Il n'existe donc plus de consommation de courant au niveau de T4 et R3 (au lieu de 10 mA dans le cas de la figure 4).

Bien entendu, pour que ce circuit opère comme décrit, la tension de grille qui rend T5 conducteur doit être supérieure à Vref, et par exemple de 1,5 volt.

Les composants DZ et R5 ont pour objet de protéger la grille de T5, la tension d'avalanche de la DZ étant choisie par exemple égale à 5 volts.

Selon une variante de réalisation non illustrée, dans le cas où la résistance drain-source de T4 à l'état conducteur est suffisamment élevée (par exemple de l'ordre de 50 Ω), la résistance R3 peut être supprimée.

Les montages des figures 4 et 5 permettent de dériver des courants de fuite atteignant par exemple 10 à 20 mA.

Bien entendu, la présente invention n'est nullement limitée aux formes de réalisation décrites et représentées, mais l'homme de l'art saura y apporter toute variante ou modification conforme à son esprit.

En particulier, bien que l'on ait décrit ci-dessus un circuit mettant en jeu des transistors de type MOS, il est bien entendu que d'autres types de transistors, notamment des transistors bipolaires, peuvent être utilisés.

## Revendications

1. Circuit de détection de la fermeture d'une clé de contact (CL), destiné à la mise en service d'un circuit régulateur de la charge d'une batterie par un alternateur, ce circuit comprenant en série entre la tension de batterie (B+) et la masse un interrupteur de clé de contact (CL), une lampe témoin (L), une diode (D1), et un interrupteur commandé à semi-conducteur (T1), ainsi qu'un moyen (A1) pour comparer la tension au point commun entre la diode et l'interrupteur à semi-conducteur avec une faible valeur prédéterminée, dont une sortie (DL) commande le circuit régulateur, et un moyen (T3) pour commander l'ouverture dudit interrupteur une fois que la régulation s'effectue normalement, **caractérisé en ce qu'**il comprend un circuit (T1, T2, Si; T4, R3) de dérivation des courants susceptibles de circuler dans une résistance parasite (RF) reliant la tension de batterie à la borne haute de l'interrupteur commmandé (T1), branché entre ladite borne haute et la masse et comprenant un moyen à semi-conducteur (T1; T4).

2. Circuit selon la revendication 1, **caractérisé en ce que** ledit moyen à semi-conducteur comprend un premier transistor (T1), **en ce qu'**il est prévu un second transistor (T2) de même type que le premier transistor, les deux transistors étant branchés en miroirs de courant, et **en ce qu'**il est prévu en outre une source de courant constant (S1) entre la tension de batterie et le second transistor, le moyen à semi-conducteur du circuit de dérivation étant constitué par le premier transistor.

3. Circuit selon la revendication 2, **caractérisé en ce que** le second transistor (T2) présente une surface de jonction égale à une fraction de celle du premier transistor (T1), de telle sorte que le courant maximal susceptible d'être dérivé est égal à un multiple du courant produit par la source de courant constant (S1).

4. Circuit selon l'une des revendications 2 et 3, **caractérisé en ce qu'**il est prévu au niveau de la sortie du moyen comparateur (A1) une diode (D2) destinée à empêcher toute circulation de courant en provenance de la source de courant constant (S1) en direction dudit moyen comparateur (A1).

5. Circuit selon la revendication 1, **caractérisé en ce que** le circuit de dérivation comprend un montage série d'un transistor (T4) et d'une résistance (R3), ce montage étant branché en parallèle avec l'interrupteur à semi-conducteur (T1).

6. Circuit selon la revendication 1, **caractérisé en ce que** le circuit de dérivation comprend un transistor (T4) branché en parallèle avec l'interrupteur à semi-conducteur, ledit transistor présentant une résistance substantielle en conduction.

7. Circuit selon l'une des revendications 5 et 6, **caractérisé en ce qu'**une borne de commande du transistor (T4) du circuit de dérivation reçoit une tension constante.

8. Circuit selon la revendication 7, **caractérisé en ce qu'**il comprend un autre transistor (T5) branché entre ladite borne de commande et la masse et dont une borne de commande reçoit une tension qui est fonction de la tension aux bornes dudit interrupteur à semi-conducteur (T1).

9. Circuit selon l'une des revendications 1 à 8, **caractérisé en ce que** les transistors sont des transistors de type MOS.

## Claims

1. Circuit for detecting the closure of an ignition key (CL), intended to bring into operation a circuit regulating the charging of a battery by an alternator, this circuit comprising, in series between the battery voltage (B+) and ground, an ignition key switch (CL), an indicator lamp (L), a diode (D1) and a controlled semiconductor switch (T1), as well as a means (A1) for comparing the voltage at the common point between the diode and the semiconductor switch with a predetermined low value, an output (DL) of which controls the regulating circuit, and a means (T3) for controlling the opening of the said switch once the regulation is taking place normally, **characterised in that** it comprises a circuit (T1, T2, S1; T4, R3) for diverting the current liable to flow in a stray resistance (RF) connecting the battery voltage to the high terminal of the controlled switch (T1) connected between the said high terminal and ground and comprising a semiconductor means (T1; T4).

2. Circuit according to Claim 1, **characterised in that** the said semiconductor means comprises a first transistor (T1), **in that** a second transistor (T2) of the same type as the first transistor is provided, the two transistors being connected as current mirrors, and **in that** a constant current source (S1) is also provided between the battery voltage and the second transistor, the semiconductor means of the diversion circuit consisting of the first transistor.

3. Circuit according to Claim 2, **characterised in that** the second transistor (T2) has a junction surface equal to a fraction of that of the first transistor (T1), so that the maximum current able to be diverted is equal to a multiple of the current produced by the constant current source (S1).

4. Circuit according to one of Claims 2 and 3, **characterised in that** there is provided, at the output of the comparator means (A1), a diode (D2) intended to prevent any flow of current coming from the constant current source (S1) in the direction of the said comparator means (A1).

5. Circuit according to Claim 1, **characterised in that** the diversion circuit comprises a series connection of a transistor (T4) and a resistor (R3), this connection being connected in parallel with the semiconductor switch (T1).

6. Circuit according to Claim 1, **characterised in that** the diversion circuit comprises a transistor (T4) connected in parallel with the semiconductor switch, said transistor having a substantial resistance in conduction.

7. Circuit according to one of Claims 5 and 6, **characterised in that** a control terminal of the transistor (T4) of the diversion circuit receives a constant voltage.

8. Circuit according to Claim 7, **characterised in that** it comprises another transistor (T5) connected between the said control terminal and ground and a control terminal of which receives a voltage which is a function of the voltage at the terminals of the said semiconductor switch (T1).

9. Circuit according to one of Claims 1 to 8, **characterised in that** the transistors are transistors of the MOS type.

## Patentansprüche

1. Schaltung zur Erfassung des Schließens eines Zündschlüssels (CL), die zum Einschalten einer Reglerschaltung zur Regelung der Ladung einer Batterie durch einen Wechselstromgenerator bestimmt ist, wobei diese Schattung, zwischen der Batteriespannung (B+) und der Masse in Reihe geschaltet, einen Zündschlüsselschalter (CL), eine Kontrolleuchte (L), eine Diode D1) und einen gesteuerten Halbleiterschalter (T1) umfaßt, sowie ein Mittel (A1), um die Spannung am gemeinsamen Anschluß zwischen der Diode und dem Halbleiterschalter mit einem vorbestimmten niedrigen Wert zu vergleichen, von dem ein Ausgang (DL) die Reglerschaltung steuert, und ein Mittel (T3), um das Öffnen des besagten Schaiters zu steuern, sobald die Regelung normal erfolgt, **dadurch gekennzeichnet**, daβ sie eine Abzweigschaltung (T1, T2, S1; T4, R3) zur Abzweigung der Ströme umfaßt, die in einem Nebenschlußwiderstand (RF) fließen können, der die Batteriespannung mit der oberen Klemme des gesteuerten Schalters (T1) verbindet, die zwischen der besagten oberen Klemme und der Masse geschaltet ist und ein Halbleitermittel (T1; T4) umfaßt.

2. Schaltung nach Anspruch 1, **dadurch gekennzeichnet**, daβ das besagte Halbleitermittel einen ersten Transistor (T1) umfaßt, d a β ein zweiter Transistor (T2) des gleichen Typs wie der erste Transistor vorgesehen ist wobei die beiden Transistoren als Stromspiegel geschaltet sind, und d a β außerdem eine Konstantstromquelle (Si) zwischen der Batteriespannung und dem zweiten Transistor vorgesehen ist, wobei das Halbleitermittel der Abzweigschaltung durch den ersten Transistor gebildet wird.

3. Schaltung nach Anspruch 2, **dadurch gekennzeichnet**, daβ der zweite Transistor (T2) eine Übergangsfläche gleich einem Bruchteil der Übergangsfläche des ersten Transistors (T1) aufweist, so daß der maximal abzweigbare Strom gleich einem Vielfachen des durch die Konstantstromquelle (S1) erzeugten Stroms ist.

4. Schaltung nach einem der Ansprüche 2 und 3, **dadurch gekennzeichnet, daß** am Ausgang des Vergleichsmittels (A1) eine Diode (D2) vorgesehen ist, deren Aufgabe darin besteht, jedes Fließen eines von der Konstantstromquelle (S1) kommenden Stroms in Richtung des besagten Vergleichsmittels (A1) zu verhindern.

5. Schaltung nach Anspruch 1, **dadurch gekennzeichnet**, daβ die Abzweigschaltung eine Reihenschaltung eines Transistors (T4) und eines Widerstands (R3) umfaßt, wobei diese Schaltung mit dem Halbteiterschalter (T1) parallel geschaltet ist.

6. Schaltung nach Anspruch 1, **dadurch gekennzeichnet**, daβ die Abzweigschaltung einen Transistor (T4) umfaßt, der mit dem Halbleiterschalter parallel geschaltet ist, wobei der besagte Transistor im Durchlaßzustand einen substantiellen Widerstand aufweist.

7. Schaltung nach einem der Ansprüche 5 und 6, **dadurch gekennzeichnet**, daβ ein Steueranschluß des Transistors (T4) der Abzweigschaltung eine konstante Spannung erhält.

8. Schaltung nach Anspruch 7, **dadurch gekennzeichnet, daß** sie einen anderen Transistor (T5) umfaßt, der zwischen dem besagten Steueranschluß und der Masse geschaltet ist und von dem ein Steueranschluß eine Spannung erhält, die von der Klemmenspannung des besagten Halbleiterschalters (T1) abhängig ist.

9. Schaltung nach einem der Ansprüche 1 bis 8, **dadurch gekennzeichnet**, daβ es sich bei den Transistoren um MOS-Transistoren handelt.
